Europäisches Patentamt

European Patent Office

Office européen des brevets

(11) Numéro de publication: **0 245 135**

**A1**

## DEMANDE DE BREVET EUROPEEN

(21) Numéro de dépôt: 87400788.3

(51) Int. Cl.⁴: **B 23 Q 15/12**

(22) Date de dépôt: 08.04.87

(30) Priorité: 23.04.86 FR 8605887

(43) Date de publication de la demande:
11.11.87 Bulletin 87/46

(84) Etats contractants désignés:
AT BE CH DE ES GB GR IT LI LU NL SE

(71) Demandeur: G E P GROUPE PASQUIER
F-49230 Saint Germain sur Moine (FR)

(72) Inventeur: Vacan, André
5 rue de la Crume
Tiffauges (Vendée) (FR)

(74) Mandataire: Cabinet Pierre HERRBURGER
115, Boulevard Haussmann
F-75008 Paris (FR)

(54) Dispositif d'usinage notamment pour un robot appliqué au cardage des cuirs.

(57) a) Dispositif d'usinage notamment pour un robot appliqué au cardage des cuirs.

b) Dispositif d'usinage caractérisé en ce qu'il comporte une poupée porte-outil (11, 11a) recevant un outil rotatif entraîné (24), un équipage (12, 8, 9, 20) mobile règlable dans la direction d'action de l'outil muni d'un bras rigide portant la poupée (11, 11a) et équipé de capteurs (10) à jauges de contraintes pour mesurer l'effort exercé par l'outil (24) et un support (2) portant l'équipage mobile relié à l'extrémité (1) du bras de robot et d'un circuit de commande (17).

c) Dispositif notamment applicable à l'usinage tel que le cardage des cuirs.

Fig.1

EP 0 245 135 A1

## Description

"Dispositif d'usinage notamment pour un robot appliqué au cardage des cuirs".

La présente invention concerne un dispositif d'usinage notamment destiné à être fixé à l'extrémité d'un bras de robot applicable en particulier au cardage de dessus de chaussures ainsi qu'à l'ébavurage ou autres procédés d'usinage dans des techniques différentes de celle de la chaussure.

Il existe de nombreux outils qui se fixent à l'extrémité d'un bras de robot comme par exemple des outils à découper, à souder, des pinces de manutention, des pistolets de peinture, etc... dans de multiples domaines d'activité en particulier dans la construction automobile.

Toutefois, dans certains domaines, l'intervention de l'homme qui tient un outil se transpose difficilement à une machine automatique. Cela est particulièrement le cas dans des domaines d'activité utilisant des matériaux d'origine animale ou végétale dont les caractéristiques ne sont pas rigoureusement constantes. Ainsi, dans la fabrication d'articles chaussants, à semelle moulée, le cardage du bord inférieur du dessus de la chaussure avant le moulage des semelles se fait à l'aide d'un outil motorisé tenu à la main. Pour faciliter le travail, on met en place un gabarit sur le dessus de la chaussure à l'endroit que ne doit pas dépasser le cardage. Outre le fait que l'ouvrier doit tenir son outil motorisé à la main et suivant un angle incliné par rapport à la verticale et à l'horizontale, en général un angle de 45°, le travail est relativement délicat ; la fraise abîme et détruit très rapidement le gabarit. En outre, la pression avec laquelle se fait le cardage est relativement régulière mais manque de précision.

De plus, la flexibilité de la production requiert de fréquents changements de moules, qui s'accompagnent d'autant de réglages des gabarits. Si ces réglages ne sont pas effectués avec soin, la qualité du produit en sera affectée.

Or, la qualité de l'accrochage de la semelle au-dessus de la chaussure et l'aspect de l'article chaussant ainsi réalisé dépendent de la précision du cardage.

La présente invention a pour but de créer un dispositif d'usinage permettant d'automatiser certains travaux d'usinage à l'aide d'une fraise ou outil analogue nécessitant l'application d'une pression relativement constant malgré les aléas que l'outil peut rencontrer sur son trajet d'usinage, en particulier le cardage du cuir des dessus de chaussures.

A cet effet, l'invention concerne un dispositif du type ci-dessus, caractérisé en ce qu'il se compose :
- d'une poupée porte-outil pour recevoir un outil rotatif entraîné,
- d'un équipage mobile réglable dans la direction d'action de l'outil, muni d'un bras rigide portant la poupée et équipé de jauges de contraintes pour mesurer l'effort exercé par l'outil sur la pièce à travailler.
- d'un support relié à l'extrémité du bras du robot et portant l'équipage mobile,
- d'un circuit de commande recevant les signaux des jauges de contraintes et commandant le déplacement de l'équipage mobile pour asservir la pression exercée par l'outil sur la pièce à une valeur de consigne.

Le dispositif selon l'invention est d'une structure particulièrement simple permettant son utilisation à l'usinage de pièces de forme compliquée ou géométriquement difficiles à définir de manière précise comme, par exemple la lignes de fermeture (dite coupe-gomme) d'un moule pour injection directe sur tige d'une semelle de chaussure.

Le règlage de la pression d'application de l'outil se fait dans la direction d'application de l'outil. Ce règlage est asservi automatiquement sur un signal de pression de consigne, la détection de la pression réelle se faisant à l'aide du support souple portant l'outil.

Le dispositif d'usinage ainsi réalisé présente une structure très compacte qui est simple et qui permet son emploi dans l'industrie de la chaussure.

La simplicité de cette structure se traduit également par une grande robustesse de celle-ci.

Suivant une caractéristique particulièrement avantageuse, le moyen d'entraînement de l'outil est constitué par un moteur relié à l'outil par une transmission dont au moins la partie entre le support et la poupée pourte-outils est constituée par un flexible de transmission de mouvement de rotation.

Cette caractéristique est importante pour la précision de l'asservissement en pression puisque le flexible qui assure la transmission du mouvement de rotation de la partie amont de la transmission à la sortie du moteur ou moyen d'entraînement jusqu'à la poupée, ne fausse pas l'asservissement en pression qui, dans le cas du cardage de tige de chaussure, correspond à un effet d'environ un kilogramme. La légèreté du dispositif et sa grande souplesse du fait de la séparation de la poupée porte-outil et du support, permettent de réduire considérablement l'inertie de l'asservissement.

C'est ainsi qu'en particulier, dans le domaine de la chaussure, dans lequel les matières utilisées peuvent avoir des caractéristiques relativement peu uniformes, avec des surépaisseurs, etc..., l'asservissement en pression se fait de manière très souple et surtout très rapide.

Bien que cette transmission flexible ne présente une rigidité gênante à la précision de l'asservissement, elle transmet des couples relativement importants et surtout compatibles avec les travaux que doit effectuer l'outil porté par la poupée porte-outil tel qu'un outil de cardage.

Comme l'extrémité du bras d'un robot peut se déplacer dans trois dimensions et tourner sur elle-même, il est nécessaire d'assurer l'entraînement de l'outil par un moyen de transmission ne passant pas par cette extrémité du bras du robot. Cette transmission se fait de façon particulièrement avantageuse, selon l'invention en ce que le support porte un bras pivotant autour de l'axe du support contenant une transmission à courroie passant sur deux poulies, la première étant coaxiale à l'axe de pivotement du bras et la seconde étant à l'extrémité du bras pour être reliée à l'extrémité du flexible dont l'autre extrémité est reliée à la poupée porte-outils.

Cette liaison pour la transmission du mouvement donne une grande liberté de mouvement à l'extrémité du bras et au dispositif d'usinage porté par cette extrémité. Comme le dispositif d'usinage doit pouvoir effectuer un peu plus d'un tour complet, le débattement du bras de transmission pivotant permettra au porte outil une rotation de 1 tour 1/2 environ sans que la transmission flexible interfère avec le poignet ou le bras du robot. De manière avantageuse, et comme le dispositif d'usinage n'a pas à effectuer de tour complet sur lui-même, il est intéressant de limiter le pivotement du bras pivotant autour de son axe par des butées.

Suivant une autre caractéristique avantageuse de l'invention, le dispositif comporte une second lame relativement souple dont une extrémité est fixée au support rigide et dont l'autre extrémité porte une masselotte, cette lame comportant également un capteur à jauges de contraintes relié au circuit de commande pour tenir compte de l'inertie du dispositif au cours de son mouvement de travail.

Ce dispositif de compensation est particulièrement intéressant lorsque le dispositif travaille rapidement comme cela est le cas dans l'industrie de la chaussure. Il suffit en effet de quelques secondes pour que le dispositif carde un pied.

Suivant une autre caractéristique avantageuse de l'invention, l'équipage mobile règlable est relié au support par l'intermédiaire d'un vérin à double effet commandé assurant l'asservissement de la pression de l'outil sur la pression de consigne. Ce vérin peut, en particulier, être un vérin pneumatique qui offre l'avantage d'une grande souplesse de fonctionnement.

De façon avantageuse, ce vérin pneumatique à double effet peut être un vérin dit "sans frottement" comprenant deux soufflets agissant de part et d'autre d'un piston, ce dernier ne prenant pas appui sur les parois du cylindre.

La présente invention sera décrite de façon plus détaillée à l'aide d'un exemple de réalisation d'un dispositif d'usinage selon l'invention représenté schématiquement sur les dessins annexés dans lesquels :

- La figure 1 est une vue de face d'un dispositif selon l'invention,

- La figure 2 est une vue de côté du dispositif de la figure 1.

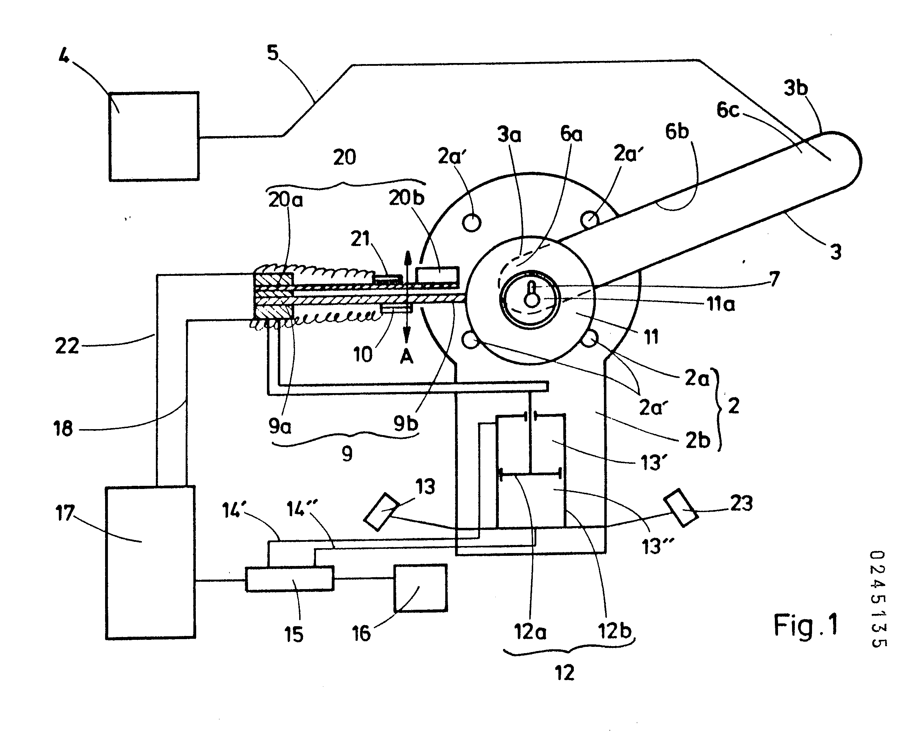

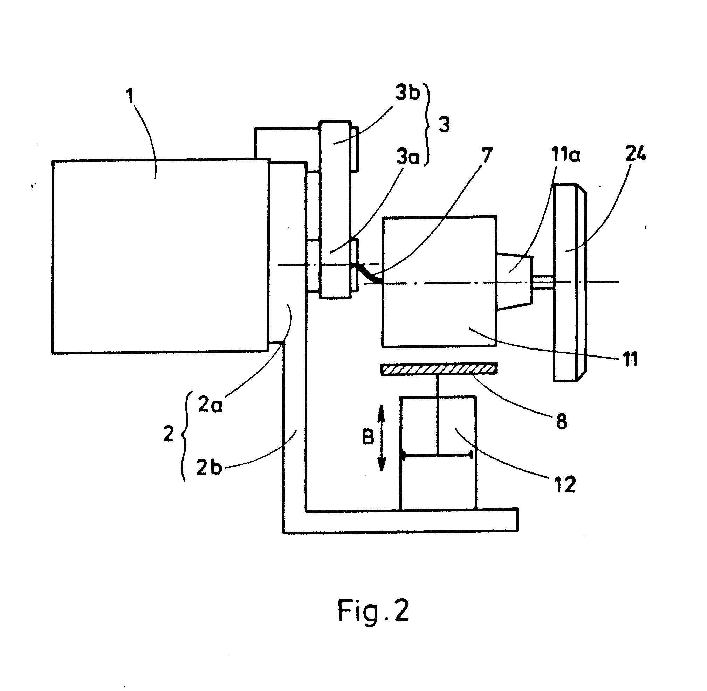

Selon les figures 1 et 2, le dispositif d'usinage est notamment destiné à être fixé à l'extrémité d'un bras de robot, extrémité qui est représentée schématiquement aux figures. Cette extrémité, appelée généralement platine, possède 1, 2 ou 3 degrés de liberté en rotation à partir de l'extrémité du bras Robot. L'ensemble mécanique qui assure la liaison entre l'extrémité du bras et la platine s'appelle généralement "poignet" (ou parfois "tête"). Cette platine reçoit des outils tels que des pinces, des outils de soudage, etc... reliés à leur alimentation par des tuyaux, câbles, etc..

Dans le cas présent, cette platine 1 reçoit le dispositif d'usinage selon l'invention.

Le dispositif s'usinage se compose d'un support 2 dont la partie 2a comporte des moyens de fixation (trous de vis 2a') pour être fixés à la platine 1 et dont l'autre partie 2b qui se situe dans le prolongement de la partie 2a porte l'équipage mobile décrit ci-après.

La partie 2a porte également un bras de transmission de mouvement 3 dont une extrémité 3a est fixée de manière pivotante à la partie 2a et dont l'autre extrémité 3b libre, est reliée au moteur ou moyen d'entraînement 4 par l'intermédiaire d'une transmission 5 telle qu'un flexible ou autre.

Ce bras de transmission 3 contient en fait une transmission à courroie formée d'une poulie 6a coaxiale à l'axe de pivotement de l'extrémité 3a sur la partie 2a, d'une courroie 6b et d'une poulie 6c, située à l'extrémité 3b et qui est reliée au moyen de transmission 5.

Le mouvement est ainsi transmis de l'extrémité 3b à l'extrémité 3a par l'intermédiaire de la courroie 6b. Au niveau de l'extrémité 3a, coaxialement à celle-ci, la poulie 6a porte solidairement en rotation un flexible de transmission 7 relié à l'équipage mobile en vue de son entraînement.

La partie 2b porte l'équipage mobile qui se compose d'un bras rigide 8 relié solidairement à l'extrémité 9a d'une lame déformable 9 dont l'autre extrémité 9b tient une poupée porte-outil 11. Cette lame déformable 9 est équipée d'un capteur à jauges de contraintes 10 avec le cas échéant une résistance de compensation de température. Ce capteur à jauges de contraintes 10 est destiné à mesurer l'effort exercé sur la lame 9 dans la direction de la double flèche A. Cet effort est celui engendré par les composantes, parallèles à la flèche, des accélérations diverses s'exerçant sur les masses du porte-outil et de l'outil, auquel s'ajoute vectoriellement l'effort exercé par l'outil sur la pièce à usiner.

Ainsi, selon la figure 1, la direction d'action de l'outil qui correspond à la direction de débattement de la poupée porte-outil 11, est la direction verticale. Ce débattement, même très faible, est autorisé par la relative souplesse de la lame 9 à laquelle est fixée la poupée porte-outil 11. Cette poupée porte-outil 11 comporte une partie 11a rotative dans laquelle est fixé l'outil par exemple la queue de la fraise. Cette partie 11a est reliée au flexible 7 en vue de son entraînement en rotation.

L'équipage mobile comporte également un moyen de réglage de position constitué par un vérin 12 solidaire de la partie 2b du support 2 et dont le piston 12a est solidaire du bras rigide 8. Ainsi, le déplacement des pistons 12a dans le vérin 12 commande le déplacement de la poupée porte-outil 11 pour augmenter ou diminuer la pression d'application de l'outil sur la pièce.

Les deux chambres 13', 13" du vérin 12 sont reliées à des conduites de fluide 14', 14" allant à une source de fluide 16 par l'intermédiaire d'un distributeur à action proportionnelle tel que servovalve, servo-distributeur, ou convertisseur électro-pneumatique, symbolisé à la figure 1 par le tiroir 15 associé à la source 16 et au dispositif de commande 17 qui reçoit les signaux d'information du capteur 11 à jauges de contraintes par l'intermédiaire de la ligne 18.

Suivant une caractéristique intéressante, le dispositif de l'invention comporte une seconde lame souple 20 dont l'extrémité 20a est reliée au bras rigide 8 et dont l'autre extrémité 20b porte une masselotte. Cette lame est équipée également d'un capteur à jauges de contraintes 21 relié au circuit de commande 17 par la ligne 22.

Ce capteur 21 qui est un accéléromètre, a pour but de mesurer les composantes de l'accélération dans la direction de la double flèche A. Grâce au circuit 17, il permet de calculer les efforts d'inertie exercés sur le porte-outil, et d'en déduire l'effort réel exercé par l'outil sur la pièce. Un avantage supplémentaire de ce dispositif est qu'il permet d'obtenir ce que l'on appelle un "retour tachymétrique" dans le servo-mécanisme de contrôle, améliorant ainsi la stabilité du système et son temps de réponse.

De façon générale, le moyen de réglage ou vérin 12 est de préférence un vérin pneumatique et la source de fluide 16 est une source d'air comprimé. Ce vérin pneumatique peut notamment être un vérin à deux chambres 13′, 13″, déformables s'appliquant de part et d'autre d'un élément formant un piston flottant, sans contact, la liaison et le guidage en translation du piston étant assurés par des biellettes (non représentées).

En général, la pression appliquée par l'outil sur la pièce à usiner est une pression de consigne constante. Toutefois, cette pression peut également évoluer suivant un programme préétabli le long du parcours effectué par l'outil à l'extrémité du bras du robot. Le circuit 17 qui reçoit la mesure de la pression réelle exercée par l'outil sur la pièce, utilise ce signal pour commander le vérin 12 et asservir la pression réelle sur la pression de consigne en tenant compte, le cas échéant, des signaux fournis par le second capteur 21.

L'entraînement de la poupée porte-outil 11 est assuré par la transmission comprenant comme déjà indiqué, d'une part, le flexible 7 reliant la partie rotative 11a, de la poupée 11 à l'axe fixe (par rapport à l'extrémité 1 du bras du robot) du bras de transmission 3. Ce bras de transmission 3 est monté pivotant autour de cet axe de la partie 2a du support 2 pour ne pas gêner le mouvement du bras du robot.

Le moteur 4 est en général monté en un point fixe et la liaison entre la sortie du moteur 4 et l'extrémité libre 3b du bras de transmission 3 est, en général, un flexible de transmission de mouvement.

De manière générale, la poupée porte-outil 11 effectue un mouvement de pivotement suivant un arc de cercle dont le centre est l'extrémité 9a de liaison entre la lame 9 et le bras rigide 8. Ce mouvement une fois détecté est compensé par le déplacement correspondant du vérin 12 agissant sur le bras 8 de manière à régler la pression d'application de l'outil à la valeur de consigne.

L'utilisation du dispositif décrit ci-dessus est simple en ce que de manière habituelle, si ce dispositif est destiné à usiner des pièces de forme géométriquement compliquée, on éduque le robot en conduisant l'outil à la main le long de la trajectoire qu'il doit effectuer ultérieurement automatiquement.

Le robot enregistre alors, dans son ordinateur, les coordonnées de cette trajectoire avec, le cas échéant, une pression de consigne ou différentes pressions de consigne.

Lorsque cette trajectoire est inscrite dans la mémoire, l'ordinateur peut commander le fonctionnement automatique du robot pour que celui-ci fasse le travail sur la trajectoire et avec la pression de consigne.

La figure 1 montre également les deux butées gauche et droite 23 qui limitent le pivotement du bras 3 pour que celui-ci ne puisse faire de tour complet et qu'il ne gêne pas le mouvement du dispositif d'usinage et de l'extrémité du bras de robot qui le porte.

La vue de côté de la figure 2 montre mieux certains détails de structure. Cette figure montre, en particulier, la disposition du bras de transmission 3 dont l'extrémité solidaire de la partie 2a du support 2 (libre en pivotement) est reliée par le flexible 7 à la partie rotative 11a de la poupée porte-outil 11. Cette figure montre également l'outil 24 en forme de fraise. La double flèche B représenté sur le vérin 12 montre la direction de déplacement de l'équipage mobile.

Dans un but de simplification, cette figure ne montre pas en vue de côté le bras rigide 8, la lame souple 9 et la lame 21 permettant de tenir compte de l'inertie de l'équipage mobile en cours de rotation.

L'invention décrite ci-dessus n'est pas limitée à son application à des bras de robot.

Ce dispositif peut également être à poste fixe et la pièce à usiner peut passer sur l'outil porté par la poupée porte-outil. Il peut, dans ce cas, s'agir par exemple d'usinage de produits en bande qui sont dévidés d'une bande d'alimentation pour passer sur l'outil, par exemple être ébarbés ou usinés suivant l'un ou leurs deux bords et être de nouveau rembobinés.

Dans ce cas, même si l'outil n'a pas à décrire de trajectoire particulière comme dans le cas du cardage d'un dessus de chaussure, il est important que la pression d'application de l'outil reste constante, ce que le dispositif, selon l'invention, permet de faire.

**Revendications**

1°) Dispositif d'usinage destiné notamment à être fixé à l'extrémité d'un bras de robot et comportant en particulier une fraise servant au cardage dans l'industrie de la chaussure ou à l'ébavurage ou au polissage de pièces ayant des formes compliquées, dispositif caractérisé en ce qu'il se compose :
- d'une poupée porte-outil (11, 11a) pour recevoir un outil rotatif entraîné (24),
- d'un équipage (12, 8, 9, 20) mobile réglable dans la direction d'action de l'outil (A, B) muni d'un bras rigide (8) portant la poupée (11, 11a) et équipé de capteurs (10) à jauges de contraintes pour mesurer l'effort exercé par l'outil (24) sur la pièce à travailler,
- d'un support (2) relié à l'extrémité (1) du bras du robot et portant l'équipage mobile (12,8,9,20),

-d'un circuit de commande (17) recevant les signaux des capteurs (10) à jauges de contraintes et commandant le déplacement de l'équipage mobile pour asservir la pression exercée par l'outil sur la pièce à une valeur de consigne.

2°) Dispositif d'usinage selon la revendication 1, caractérisé en ce que le moyen d'entraînement de l'outil est constitué par un moteur (4) relié à l'outil par une transmission dont au moins la partie (7) entre le support (2) et la poupée porte-outils (11, 11a) est constituée par un flexible de transmission de mouvement de rotation.

3°) Dispositif selon la revendication 2, caractérisé en ce que le support (2) porte un bras (3) pivotant autour de l'axe du support et contenant une transmission à courroie (6b) passant sur deux poulies (6a, 6c), la première (6a) étant coaxiale à l'axe de pivotement du bras (3) et la seconde (6c) étant à l'extrémité du bras (3) pour être reliée à l'extrémité du flexible (7) dont l'autre extrémité est reliée à la poupée porte-outils (11, 11a).

4°) Dispositif selon la revendication 1, caractérisé en ce qu'il comporte un dispositif de mesure des accélérations (20) dans la direction de l'effort à exercer, pour tenir compte des efforts dus à l'inertie, y compris de la composante perturbatrice du poids de l'équipage mobile.

5°) Dispositif selon la revendication 1, caractérisé en ce qu'il comporte un équipage mobile réglable relié au support (2) par l'intermédiaire d'un vérin à double effet (12) commandé assurant l'asservissement de la pression d l'outil sur la pression de consigne.

6°) Dispositif selon la revendication 5, caractérisé en ce que le vérin (12) est un vérin pneumatique.

7°) Dispositif selon l'une quelconque des revendications 1 à 3, caractérisé en ce qu'il comporte deux butées (23) pour limiter le pivotement du bras (3).

Fig.1

0245135

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | GB-A-2 053 796  (P. STOLZER)<br>* En entier * | 1-7 | B 23 Q  15/12 |
| | --- | | |
| A | FR-A-2 500 279  (ANVER)<br>* En entier * | 1-7 | |
| | ----- | | |

|  |
|---|
| DOMAINES TECHNIQUES RECHERCHES (Int. Cl.4) |
| G 05 B<br>B 23 Q |

Le présent rapport de recherche a été établi pour toutes les revendications

| Lieu de la recherche | Date d'achèvement de la recherche | Examinateur |
|---|---|---|
| LA HAYE | 03-08-1987 | MOYLE J.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82